# EUROPEAN PATENT APPLICATION

(11) **EP 3 244 512 A1**
(43) Date of publication of application: **15.11.2017**
(21) Application number: 17158575.5
(22) Date of filing: 28.02.2017
(51) Int. Cl.: H02K 1/27

(54) **ROTOR ASSEMBLY FOR A DIRECT DRIVE MOTOR**

(30) Priority: 27.04.2016 US 201615139624
(71) Applicant: Whirlpool Corporation, Benton Harbor, MI 49022 (US)
(72) Inventor: Starke, Orlando, 21025 Comerio (IT)
(74) Representative: Guerci, Alessandro

(57) **Abstract**

A rotor assembly (74) is provided for a motor (16) of a laundry appliance (10). The rotor assembly (74) includes a rotor frame (66) having a hub region (92) that extends radially outward from a central hub (72), and a cylindrical rim (96) extending axially from the hub region (92). The rotor assembly (74) further includes a yoke (100) disposed at an inner surface of the cylindrical rim (96), and a plurality of magnets (86) disposed at an inner surface of the yoke (100), wherein the yoke (100) comprises a helically wound metal strip (102).

## Description

### BACKGROUND

The present device generally relates to a rotor assembly for a motor, and more specifically, to a rotor assembly for a direct drive motor of a laundry appliance as well as a laundry appliance incorporating the motor with the rotor assembly and a method of making the rotor assembly.

### SUMMARY

In at least one aspect, a motor for a laundry appliance is provided, comprising a stator assembly, and a rotor assembly that rotates around the stator assembly. The rotor assembly comprises a central hub for securing the rotor assembly to a drive shaft of the motor such that the rotor assembly rotates about an axis of the drive shaft, and a rotor frame. The rotor frame comprises a hub region for receiving the central hub, the hub region extending radially outward from the central hub, and a cylindrical rim extending axially from the hub region. The rotor assembly further comprises a yoke disposed at an inner surface of the cylindrical rim, and a plurality of magnets disposed at an inner surface of the yoke, wherein the yoke comprises a helically wound metal strip.

In at least another aspect, a rotor assembly is provided for a motor of a laundry appliance, where the motor has a stator assembly having an outer surface about which the rotor assembly rotates. The rotor assembly comprises a central hub for securing the rotor assembly to a drive shaft of the motor such that the rotor assembly rotates about an axis of the drive shaft, and a rotor frame. The rotor frame comprises a hub region for receiving the central hub, the hub region extending radially outward from the central hub and having a circular outer periphery, and a cylindrical rim extending axially from the outer periphery of the hub region so as to be coaxial with the drive shaft, the cylindrical rim having an inner surface facing towards the outer surface of the stator assembly. The rotor assembly further comprises a yoke disposed at the inner surface of the cylindrical rim, the yoke having an inner surface facing towards the outer surface of the stator assembly, and a plurality of magnets disposed at the inner surface of the yoke, wherein the yoke comprises a helically wound metal strip.

In at least another aspect, a method of making a rotor assembly comprises forming a yoke using a helically wound metal strip, the yoke having an outer surface and an inner surface; disposing magnets about an outer surface of an insert mold; positioning the yoke around the magnets such that the inner surface of the yoke faces the magnets; placing the insert mold with the magnets and the yoke into an injection mold cavity; and injection molding a rotor frame where the rotor frame has a cylindrical rim that extends along the outer surface of the yoke.

These and other features, advantages, and objects of the present device will be further understood and appreciated by those skilled in the art upon studying the following specification, claims, and appended drawings.

### BRIEF DESCRIPTION OF THE DRAWINGS

In the drawings:
FIG. 1 is a top perspective view of a laundry appliance according to one embodiment;
FIG. 2 is a cross-sectional view of an example of a direct drive motor that may be used in the laundry appliance of FIG. 1;
FIG. 3 is a perspective view of a rotor assembly used in the motor shown in FIG. 2;
FIG. 4 is a cross-sectional view of the rotor assembly shown in FIG. 3 taken along line IV-IV;
FIG. 5 is an enlarged cross-sectional view of a region of the rotor assembly shown in FIG. 4 designated as area V;
FIG. 6 is an exploded perspective view of the rotor assembly shown in FIGS. 3-5;
FIG. 7 is a schematic view of an apparatus for producing a metal strip used in the rotor assembly shown in FIGS. 3-6;
FIG. 8A is a cross-sectional view of the apparatus shown in FIG. 7 taken along line VIIIA;
FIG. 8B is a cross-sectional view of the apparatus shown in FIG. 7 taken along line VIIIB;
FIG. 8C is a cross-sectional view of the apparatus shown in FIG. 7 taken along line VIIIC;
FIG. 8D is a cross-sectional view of the apparatus shown in FIG. 7 taken along line VIIID;
FIG. 8E is a cross-sectional view of the apparatus shown in FIG. 7 taken along line VIIIE;
FIG. 9 is a perspective view of an apparatus for forming the yoke used in the rotor assembly shown in FIGS. 3-5 using the metal strip as formed using the apparatus shown in FIGS. 7-8E; and
FIG. 10 is an enlarged perspective view of the metal strip corresponding to the area X in FIG. 9.

### DETAILED DESCRIPTION OF EMBODIMENTS

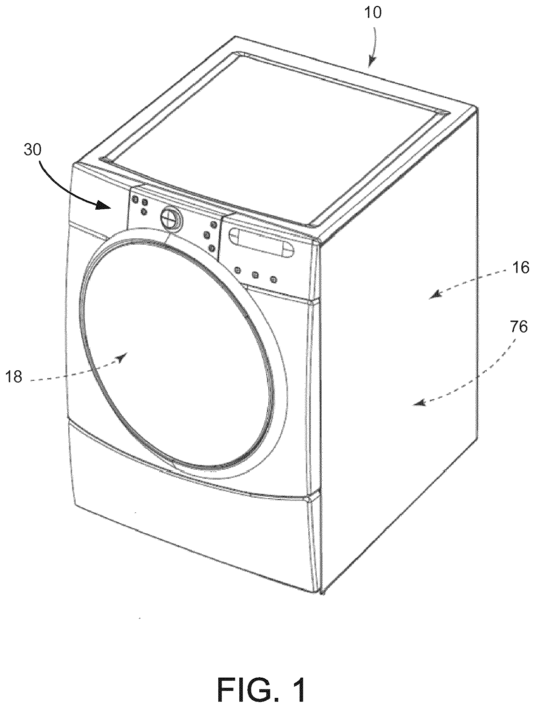

For purposes of description herein the terms "upper," "lower," "right," "left," "rear," "front," "vertical," "horizontal," and derivatives thereof shall relate to the device as oriented in FIG. 1. However, it is to be understood that the device may assume various alternative orientations and step sequences, except where expressly specified to the contrary. It is also to be understood that the specific devices and processes illustrated in the attached drawings and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

As indicated above, the embodiments described herein relate to a rotor assembly for use in a direct drive motor of a laundry appliance. FIG. 1 shows a laundry appliance 10 that happens to be in the form of a washing appliance. In some embodiments, the laundry appliance 10 may include additional and/or different components than those shown in FIG. 1 and described herein. The laundry appliance includes a drum 18 in which laundry is received. The drum 18 is disposed in a tub 76 and is rotated by means of a motor 16 as described further below.

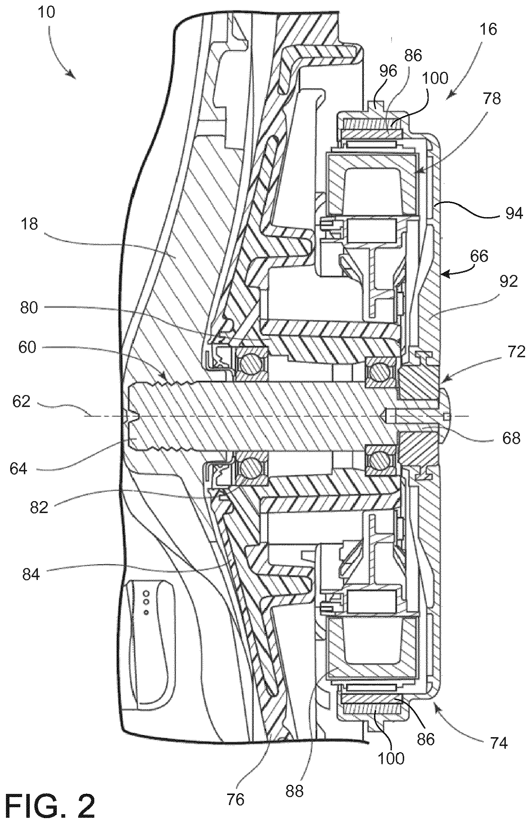

In the illustrative embodiment shown in FIG. 1, the laundry appliance 10 is a front-loaded appliance in which the drum 18 is accessed through an opening defined in the front of the laundry appliance 10. It should be appreciated that in other embodiments the laundry appliance 10 may have other configurations. For example, the laundry appliance 10 may be a top-loaded appliance in which the drum 18 is accessed through an opening defined in the top of the laundry appliance 10. Further, in the illustrative embodiment, the rotational axis 62 (FIG. 2) of the drum 18 is horizontal. It should be appreciated that the rotational axis may have other configurations; for example, the rotational axis may be vertical. The laundry appliance 10 may further include a user interface panel 30 for a user to control the wash/dry cycles of the appliance.

The motor 16 may be a direct drive permanent magnet synchronous motor (also known as a brushless, alternating current (AC) motor). As shown in FIG. 2, according to the various embodiments, a motor 16 for the laundry appliance 10, such as a direct drive, may include a drive shaft 60 that is coupled to a drum 18 at a first end 64 of drive shaft 60. A rotor assembly 74 having a rotor frame 66 is coupled proximate a second end 68 of the drive shaft 60. A central hub 72 is included within the rotor frame 66.

The drum 18 includes a cavity that is sized to receive clothes and other laundry 20 to be washed or dried in the laundry appliance 10. The drum 18 is set within a tub 76 that receives wash water for cleaning the laundry set within the drum 18. The direct drive motor 16 is attached proximate the tub 76, where a stator assembly 78 of the direct drive motor 16 is coupled to a portion of the tub 76, thereby substantially fixing the location of the stator assembly 78. Disposed in the tub 76 is a bearing housing 80 including at least one bearing 82 that allows the drive shaft 60 to be rotated within the wall 84 of the tub 76. As described further below, the rotor assembly 74 includes magnets 86 that are in magnetic communication with stator coils 88 of the stator assembly 78 and form a permanent synchronous motor 16. Each stator field coil 88 of the motor 16 is separately electrically connected to an inverter (not shown). During operation, the inverter supplies AC power of the same frequency but with different phases to each stator field coil 88 of the motor 16. The multi-phased AC power flows through the stator field coils 88 of the motor 16 to produce a rotating magnetic field; that is, the direction of the combined magnetic field produced by the plurality of stator field coils 88 rotates. This rotating magnetic field interacts with the one or more permanent magnets 86 and causes the rotor assembly 74 to rotate. In this manner, as the rotor 74 rotates about the stator assembly 78, the connection of the rotor assembly 74 to the drum 18 via the drive shaft 60 allows for the transfer of torque from the rotor assembly 74 to the drive shaft 60 and, in turn, to the drum 18 such that the drum 18, drive shaft 60, and rotor assembly 74 rotate about rotation axis 62. The rotation axis 62 corresponds to "the axial direction" as used herein. Moreover, the term "the radial direction" refers to directions that are perpendicular to rotation axis 62.

It is contemplated that other types of electric motors 16 can be utilized where the motor 16 includes a rotor assembly 74 that rotates relative to a stator assembly 78. Such motors 16 can include, but are not limited to, direct drive motors, motors that are coupled to transmissions, belt-drive motors, and other similar electric motors. Additionally, the various aspects of the embodiments can be used in various orientations of motor 16, including motors that are positioned along a vertical axis, a horizontal axis and/or an angled axis.

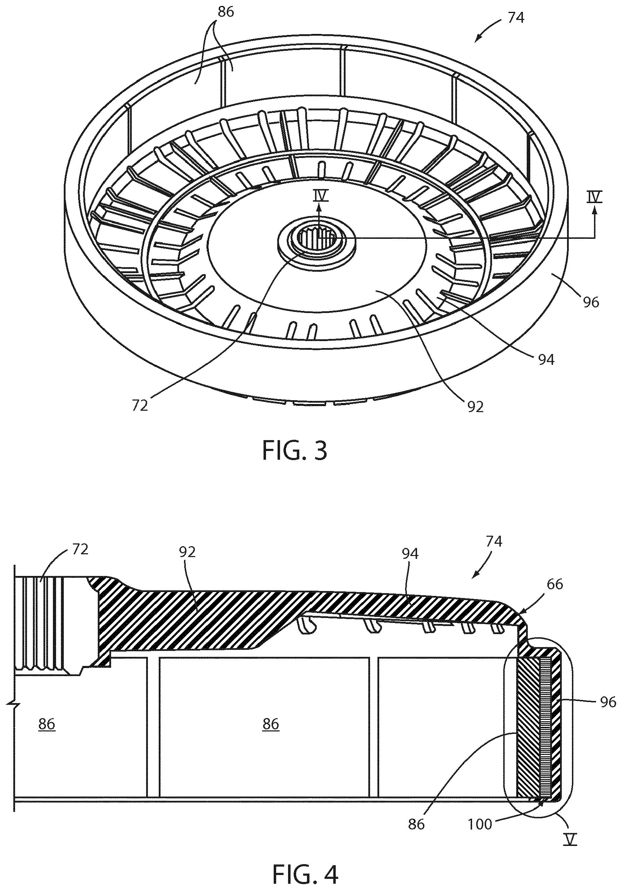

As shown in FIGS. 3-6 and described above, the rotor assembly 74 includes the central hub 72 for securing the rotor assembly to the drive shaft 60 of the motor 16 such that the rotor assembly 74 rotates about the axis 62 of the drive shaft 60. As also described above, the rotor assembly 74 further includes a rotor frame 66 and a plurality of magnets 86. The rotor frame 66 includes a hub region 92 for receiving the central hub 72. The hub region 92 extends radially outward from the central hub 72 and has a circular outer periphery. A portion 94 of hub region 92 may have a thinner profile than the portion surrounding central hub 72. The rotor frame 66 further includes a cylindrical rim 96 extending axially from the outer periphery of the hub region 92 so as to be coaxial with the rotational axis 62 of the drive shaft 60. The cylindrical rim 96 has an inner surface facing towards the cylindrical outer surface of the stator assembly 78.

The rotor assembly further includes a cylindrical yoke 100 (also known as a back iron) disposed adjacent the inner surface of the cylindrical rim 96. The cylindrical yoke 100 has an inner surface facing towards the cylindrical outer surface of the stator assembly 78. The plurality of magnets 86 are disposed adjacent the inner surface of the cylindrical yoke 100. As described further below, the cylindrical yoke 100 includes a metal strip 102 configured in the form of a helix.

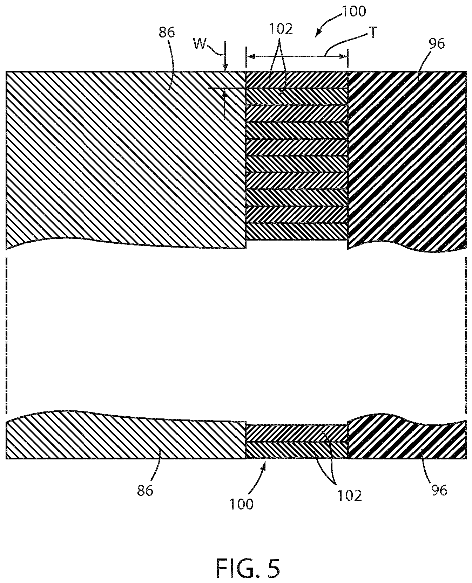

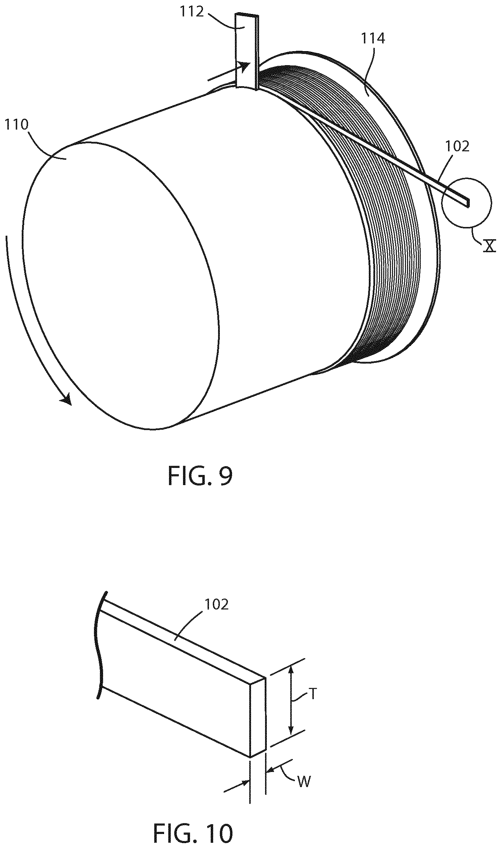

As shown in FIGS. 5 and 10, the metal strip 102 has a thickness T in the radial direction and a width W in the axial direction. The width of metal strip 102 may be less than the thickness. For example, the thickness of the metal strip 102 may be between about 3 mm and about 7 mm, and the width may be between about 0.5 mm and about 2 mm. The metal strip 102 as configured in the form of a helix may be formed such that any air gaps between adjacent windings of the metal strip 102 are between about 2 µm and about 10 µm. This may be accomplished by winding the metal strip around a cylindrical mandrel 110 as shown in FIG. 9, while using member 112 to guide the metal strip 102 onto the mandrel 110 so as to obtain the appropriate spacing relative to the last winding applied to the mandrel 110. Note that member 112 may be forked such the metal strip 102 is guided between to prongs of the forked end of member 112. The mandrel 110 may have a radially protruding flange 114 at one or both ends in order to press the first winding of the metal strip 102 against the flange 114.

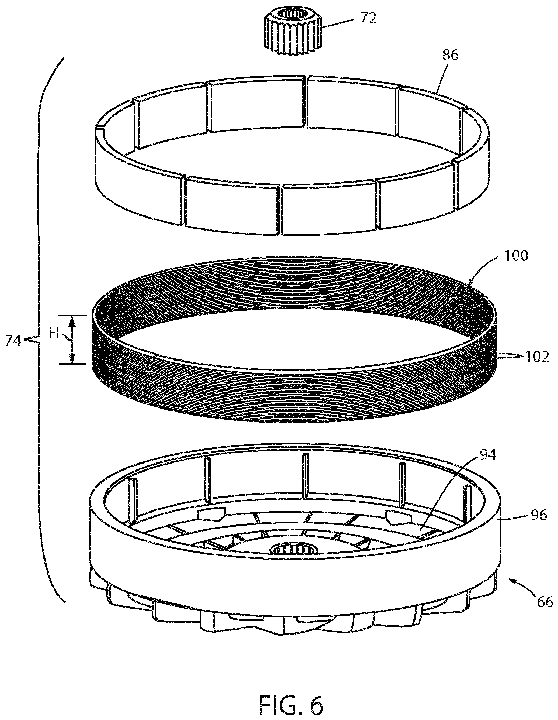

Helical yoke 100 may have an axial height H (FIG. 6) of about 20 mm to about 70 mm and a radial thickness of about 0.5 mm to about 2 mm. The radial thickness corresponds to the thickness of the metal strip 102. If the metal strip has a thickness of 0.5 mm and a yoke with an axial height of 30 mm was desired, for example, the metal strip 102 would include approximately 60 windings with no air gaps between the windings. The height and thickness of yoke 100 are flexible to accommodate the magnetic flux density as requested by the application. To help assure the stiffness and alignment while the layers are stacked, some fixation features may be added. For example, rivet pins may be added on the yoke to provide welding lines on the outer face of the yoke. Another option would be to apply some adhesive bond. In general, however, the bonding among the back iron, magnets and the rotor frame 66 is done by a polymeric over-molding process to contribute to the desired stiffness of the rotor assembly 74.

One example of a method for making rotor assembly 74 includes forming a helical yoke 100 using a metal strip 102, the yoke 100 having an outer surface and an inner surface; disposing magnets 86 about an outer surface of an insert mold; positioning the helical yoke 100 around the magnets 86 such that the inner surface of the helical yoke 100 faces the magnets 86; placing the insert mold with the magnets 86 and the helical yoke 100 into an injection mold cavity; and injection molding a plastic rotor frame 66 where the rotor frame 66 has a cylindrical rim 96 that extends along the outer surface of the helical yoke 100.

As mentioned above, the yoke 100 may be pre-formed by winding the metal strip 102 around a mandrel and then slid axially over the outer surfaces of the magnets 86. In a variation of the above method, the yoke may be formed by winding the metal strip around the magnets 86 themselves instead of a mandrel. As yet another variation, the rotor frame 66 may be pre-formed and the yoke 100 and magnets 86 may be press-fit into the rim 96 of frame 66.

The magnets 86 may be made of any conventional magnetic material and may be provided in various forms including in a magnet chain as described in U.S. Patent Application Publication No. US 2015/0089794 A1.

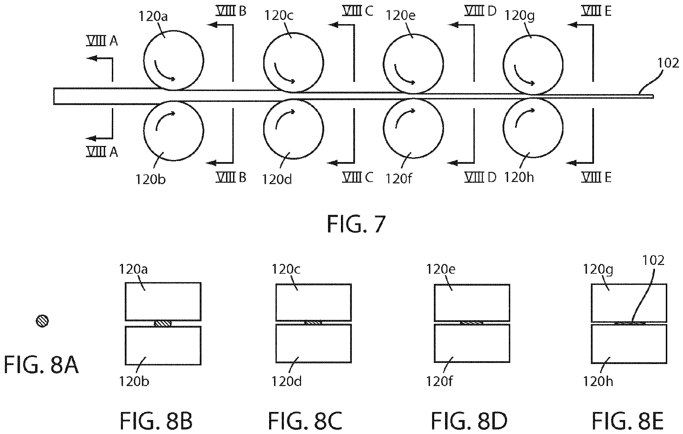

The metal strip 102 may be made of any ferromagnetic steel or other metal known to be suitable for use as a yoke. A method of forming the metal strip 102 is described below with reference to FIGS. 7 and 8A-8E.

The metal strip 102 may be made by various methods. One method is to simply cut a plurality of metal strips from a large sheet of metal using an industrial slitting apparatus. Such an apparatus can provide metal strips of and dimension down to about 9 mm when cutting a sheet of about 0.5 mm to 2 mm thickness. However, in order to obtain metal strips with a dimension of less than 9 mm, the method shown in to FIGS. 7 and 8A-8E may be used.

As shown in FIG. 7, a steel rod having a substantially circular cross-section (as shown in FIG. 8A) is fed through a first set of pressing rollers 120a and 120b, which presses the steel rod to begin to flatten it as shown in FIG. 8B. Then the steel is fed through successive second, third, and fourth sets of pressing rollers 120c-120h where the steel is further flattened to a thinner profile as shown in FIGS. 8C-8E, until the desired dimensions of the metal strip 102 are obtained. It will be appreciated that fewer or greater sets of rollers may be used to obtain the desired cross-sectional shape. As noted above, the metal strip may have a thickness (the horizontal dimension in FIG. 8E) of about 3 mm to about 7 mm and a width (the vertical dimension in FIG. 8E) of about 0.5 mm to about 2 mm. The cross-sectional area of the starting steel rod will correspond to the desired cross-sectional area of the metal strip.

An annealing step may be performed on the metal strip 102 to provide the steel the desired properties. Once the metal strip 102 is formed, the helical yoke 100 is created by bending this strip 102 with its rectangular cross section on direction of its width (not in the thickness direction) on a mandrel or the like as discussed above. The strip will thus be bent and wound into the desired diameter of the yoke. Some welding may be performed around the external surface of the final helical yoke 100. One may then conform the external diameter by fitting the helical yoke 100 inside a template.

The above-described rotor assembly 74 satisfies several design goals. First, it allows for consistent spacing between the outer diameter of the stator assembly 78 and the inner diameter of the rotor assembly 74. This is accomplished by ensuring circularity of the rotor assembly 74 and the stator assembly 78, ensuring the rotor assembly 74 has sufficient radial mechanical stiffness and rigidity to avoid distortion of its circularity while rotating, and reducing vibration of the rotor assembly 74. Compared to yokes made of joined arc segments, the helical yoke 100 has better circularity. Second, the rotor assembly 74 reduces noise by having improved radial stiffness and by reducing vibration. Third, by providing consistent spacing between the outer diameter of the stator assembly 78 and the inner diameter of the rotor assembly 74, the electromagnetic performance is improved and hence the efficiency of the motor 16 is improved. Also, the cost of producing the motor may be lowered and temperature management may be improved. The cost is lowered by using less material as compared to yokes made of joined arc segments and by having lower run out variation.

It will be understood by one having ordinary skill in the art that construction of the described device and other components is not limited to any specific material. Other exemplary embodiments of the device disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the device as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present device. The exemplary structures and processes disclosed herein are for illustrative purposes and are not to be construed as limiting.

It is also to be understood that variations and modifications can be made on the aforementioned structures and methods without departing from the concepts of the present device, and further it is to be understood that such concepts are intended to be covered by the following claims unless these claims by their language expressly state otherwise.

The above description is considered that of the illustrated embodiments only. Modifications of the device will occur to those skilled in the art and to those who make or use the device. Therefore, it is understood that the embodiments shown in the drawings and described above is merely for illustrative purposes and not intended to limit the scope of the device, which is defined by the following claims as interpreted according to the principles of patent law.

## Claims

1. A rotor assembly (74) for a motor (16) of a laundry appliance (10), the motor (16) having a stator assembly (78) having an outer surface about which the rotor assembly (74) rotates, the rotor assembly (74) comprising:
a central hub (72) for securing the rotor assembly (74) to a drive shaft (60) of the motor (16) such that the rotor assembly (74) rotates about an axis of the drive shaft (60);
a rotor frame (66) comprising:
a hub region (92) for receiving the central hub (72), the hub region (92) extending radially outward from the central hub (72) and having a circular outer periphery, and
a cylindrical rim (96) extending axially from the outer periphery of the hub region (92) so as to be coaxial with the drive shaft (60), the cylindrical rim (96) having an inner surface facing towards the outer surface of the stator assembly (78);
a yoke (100) disposed at the inner surface of the cylindrical rim (96), the yoke (100) having an inner surface facing towards the outer surface of the stator assembly (78); and
a plurality of magnets (86) disposed at the inner surface of the yoke (100),
wherein the yoke comprises a helically wound metal strip (102).

2. The rotor assembly (74) of claim 1, wherein the metal strip (102) has a thickness in the radial direction and has a width in the axial direction that is less than the thickness in the radial direction.

3. The rotor assembly (74) of claim 2, wherein the thickness of the metal strip (102) is between about 3 mm and about 7 mm.

4. The rotor assembly (74) of any one of claims 2 and 3, wherein the width of the metal strip (102) is between about 0.5 mm and about 2 mm.

5. The rotor assembly (74) of any one of claims 1-4, wherein the rotor frame (66) is injection-molded to form the rim around an outer surface of the yoke (100).

6. The rotor assembly (74) of any one of claims 1-5, wherein the helically wound metal strip is formed such that any air gaps between adjacent windings of the metal strip are between about 2 µm and about 10 µm.

7. A laundry appliance (10) comprising:
a drum (18) for receiving laundry; and
a motor (16) for rotating the drum (18), wherein the motor (16) comprises a stator assembly (78) and the rotor assembly (74) of any one of claims 1-6.

8. A motor (16) comprising the rotor assembly of any one of claims 1-6 and a stator assembly (78) having an outer surface about which the rotor assembly rotates (74).

9. A laundry appliance (10) comprising:
a drum (18) for receiving laundry; and
the motor (16) of claim 8 for rotating the drum (18).

10. A method of making a rotor assembly (74) comprising:
forming a yoke (100) using a helically wound metal strip (102), the yoke (100) having an outer surface and an inner surface;
disposing magnets (86) about an outer surface of an insert mold;
positioning the yoke (100) around the magnets (86) such that the inner surface of the yoke (100) faces the magnets (86);
placing the insert mold with the magnets (86) and the yoke (100) into an injection mold cavity; and
injection molding a rotor frame (66) where the rotor frame has a cylindrical rim (96) that extends along the outer surface of the yoke (100).

11. The method of claim 10, wherein the step of forming the yoke (100) includes helically winding the metal strip (102) around a mandrel (110) and removing the metal strip (102) from the mandrel (110).

12. The method of claim 11, wherein, in the step of forming the yoke (100), the metal strip (102) is guided onto the mandrel (110) such that any air gaps between adjacent windings of the metal strip (102) are between about 2 µm and about 10 µm.

13. The method of any one of claims 10-12, wherein the metal strip (102) has a thickness in the radial direction and has a width in the axial direction that is less than the thickness in the radial direction.

14. The method of any one of claim 13, wherein the thickness of the metal strip (102) is between about 3 mm and about 7 mm.

15. The method of any one of claims 13 and 14, wherein the width of the metal strip (102) is between about 0.5 mm and about 2 mm.
